# EUROPEAN PATENT SPECIFICATION

(11) **EP 3 413 533 B1**
(45) Date of publication and mention of the grant of the patent: **10.05.2023**
(21) Application number: 17759270.6
(22) Date of filing: 02.03.2017
(51) Int. Cl.: H04L 9/40, H04L 69/22, G06F 21/62

(54) **DATA TRANSMISSION METHOD AND SYSTEM**
DATENÜBERTRAGUNGSVERFAHREN UND -SYSTEM
PROCÉDÉ DE TRANSMISSION DE DONNÉES ET SYSTÈME

(30) Priority: 03.03.2016 CN 201610120403
(43) Date of publication of application: 12.12.2018
(73) Proprietor: Huawei Technologies Co., Ltd., Longgang District Shenzhen, Guangdong 518129 (CN)
(72) Inventor: WEI, Hanyu, Shenzhen Guangdong 518129 (CN); HAN, Lei, Shenzhen Guangdong 518129 (CN); CHENG, Jian, Shenzhen Guangdong 518129 (CN); YOU, Jianjie, Shenzhen Guangdong 518129 (CN); WANG, Hao, Shenzhen Guangdong 518129 (CN)
(74) Representative: Gill Jennings & Every LLP
(86) International application number: PCT/CN2017/075458
(87) International publication number: WO 2017/148419

(56) References cited:
- CN-A- 102 047 636
- CN-A- 102 752 220
- CN-A- 104 753 858
- US-A1- 2007 250 863
- US-A1- 2012 159 530
- US-A1- 2015 365 379

## Description

### TECHNICAL FIELD

The present invention relates to the field of Internet technologies, and in particular, to a data transmission method and a server.

### BACKGROUND

With the rise of the Internet, a user usually uses HTTP (Hyper Text Transfer Protocol, Hyper Text Transfer Protocol) to access various Internet sites or services. The HTTP protocol is an application layer protocol and a clear text protocol, and usually uses plaintext transmission. Therefore, data that is based on the HTTP protocol is easily hijacked, intercepted, and even tampered with. Consequently, user privacy is leaked, and in a serious case, an economic loss is even caused to the user.

To ensure security of data in the Internet, the TLS (Transport Layer Security, Transport Layer Security) protocol that provides functions such as certification and authentication is introduced. To access the Internet, the user needs to use the HTTP protocol that is based on TLS encryption, to be specific, encrypt the data transmitted in the Internet. Internet data encryption ensures security for free Internet communication. However, after Internet data content is encrypted, some services that are based on content awareness are invalid. Consequently, user service experience deteriorates in some cases.

For example, in a traffic management scenario in a wireless network, different service policies are provided for different types of service data flows to ensure optimal user service experience, but a service type of data cannot be identified due to data encryption. Consequently, limited resources cannot be used to serve data that a user is most concerned about. For example, for a parent-child account service in a fixed network, the service may perform filtering based on Internet data content to filter out data that is not suitable for a child to access, thereby ensuring a healthy and secure Internet access environment for a child. The prior art document US2015365379 A1 relates to parental control filters, in particular for managing, controlling and configuring intelligent parental control filters.

However, if Internet data is encrypted, a service type and content accessed by the child cannot be effectively identified. Consequently, the child may access illegal or unsuitable content. Therefore, how to ensure normal operating of a service system that is based on Internet data content while ensuring security for a user during Internet access becomes a technical problem that needs to be resolved urgently.

### SUMMARY

The present invention is defined by the appended independent claims.

Embodiments of the present invention are provided according to the claims, to resolve a technical problem that service information cannot be effectively identified when Internet service data is encrypted. The embodiments of the present invention disclose the following technical solutions:

According to the embodiments of the invention, in a process in which the server sends encrypted service data to the terminal device, the server transmits, to the awareness node, application information needed by the awareness node, so that the awareness node can learn of, based on the application information, service information of the encrypted service data transmitted between the terminal device and the server, and accordingly a service awareness system completes a service related to service content. The application information is transmitted in a plaintext manner, and the server does not need to additionally increase an encryption/decryption protocol stack. Data transmission is more convenient and system costs are lower while it is ensured that the service data between the terminal device and the server is encrypted.

It can be learned from the foregoing technical solutions that, according to the data transmission method provided in the embodiments of the present invention, a user sends an application access request to a corresponding server when accessing an Internet service. The server responds to the application access request, obtains encrypted first service data to provide the first service data for an awareness node, and provides application information corresponding to the first service data for the awareness node. The awareness node learns of service information of the first service data by using the application information, and further provides the service information for another service system to which awareness needs to be applied. In this way, when the service data is encrypted, the service information of the service data, for example, a service type, can still be identified by using the application information, so that the service system that is based on service data content operates normally.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a schematic architectural diagram of a data transmission system according to an embodiment of the present invention;
FIG. 2 is a flowchart of a data transmission method according to an embodiment of the present invention;
FIG. 3 is a schematic diagram of a message format of application information according to an embodiment of the present invention;
FIG. 4 is a flowchart of a data transmission method according to an embodiment of the present invention;
FIG. 5 is a flowchart of another data transmission method according to an embodiment of the present invention;
FIG. 6 is a flowchart of another data transmission method according to an embodiment of the present invention;
FIG. 7 is a schematic diagram of a message format of a TCP protocol packet according to an embodiment of the present invention;
FIG. 8 is a schematic diagram of a message format of a TLS protocol packet according to an embodiment of the present invention;
FIG. 9 is a schematic diagram of a message format of an IPv4 protocol packet according to an embodiment of the present invention;
FIG. 10 is a schematic diagram of a message format of an IPv6 protocol packet according to an embodiment of the present invention;
FIG. 11 is a schematic diagram of a message format of the UDP protocol according to an embodiment of the present invention;
FIG. 12 is a schematic diagram of a message format of the ICMP protocol according to an embodiment of the present invention;
FIG. 13 is a block diagram of a server according to an embodiment of the present invention; and
FIG. 14 is a block diagram of an encapsulation device according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

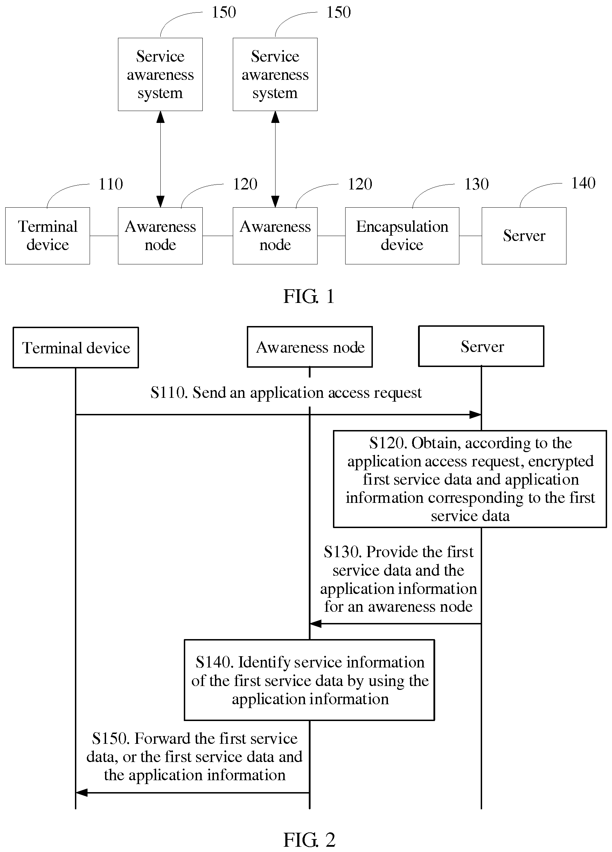

Referring to FIG. 1, FIG. 1 is a schematic architectural diagram of a data transmission system according to an embodiment of the present invention. As shown in FIG. 1, the system includes a terminal device 110, an awareness node 120, an encapsulation device 130, and a server 140.

The terminal device 110 may be any terminal such as a computer or a mobile phone that can access the Internet. The terminal device 110 communicates with the server 140 by using a wired communications network or a wireless communications network.

In this embodiment of the present invention, the server 140 is a server end that is not provided by an operator and that is configured to provide various Internet services for a user. The server 140 receives an HTTP-based request initiated by the terminal device 110, and provides a corresponding application service for the terminal device 110.

The encapsulation device 130 may be deployed on the server 140, may be an independent device independent of the server, or may be a program fragment on the server. The encapsulation device is configured to: re-encapsulate data specified by the server, and then forward data obtained through re-encapsulation. If the encapsulation device 130 is deployed inside the server 140, the server 140 may transmit data that needs to be encapsulated to the encapsulation device 130 by calling a function, for example, by using an application programming interface. If the encapsulation device 130 is not deployed inside the server 140, the server 140 transmits data that needs to be encapsulated to the encapsulation device 130 by sending a message.

The awareness node 120 is configured to sense service information of service data transmitted between the terminal device 110 and the server 140. Input of the awareness node 120 is data output by the encapsulation device 130.

The awareness node 120 may be deployed on a network path between the server 140 and the terminal device 110. One or more awareness nodes may be deployed on the network path to cooperate with other service awareness systems 150 (such as a parent-child account system) at different locations on the network path to complete service content awareness. The awareness node 120 may be an independent apparatus, may be integrated with another system (such as a service awareness system) or apparatus, or may be directly integrated with the terminal device (in this case, the awareness node is actually a program fragment in the terminal device).

The awareness node 120 provides an external query interface. After being authorized, another service awareness system may find service information of a specified service by using the query interface. The service awareness system is a service system related to service content awareness, for example, a parent-child account system or a system that performs traffic management and scheduling based on a service.

Referring to FIG. 2, FIG. 2 is a flowchart of a data transmission method according to an embodiment of the present invention. The method is applied to the system shown in FIG. 1. As shown in FIG. 2, the data transmission method includes the following steps.

S110. A terminal device sends an application access request to a server.

For example, when accessing a specific video in a video website, the terminal device generates a corresponding access request, and sends the access request to a server of the website.

S120. The server obtains, according to the application access request, encrypted first service data and application information corresponding to the first service data.

The application information is used to represent service information of the first service data, for example, information such as a service type and a priority.

In this embodiment of the present invention, in an application scenario in which service data is encrypted, to be specific, all service data returned by the server when responding to an access request of the terminal device is transmitted to the terminal device in a ciphertext form, after receiving the application access request sent by the terminal device, the server encrypts service data that responds to the application access request, to obtain the first service data; and obtains the application information of the first service data. The application information represents service content of the first service data.

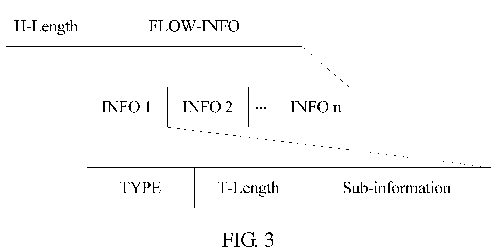

Referring to FIG. 3, FIG. 3 is a schematic diagram of a message format of application information according to an embodiment of the present invention. As shown in FIG. 3, the application information includes two fields: H-Length (a total length) and FLOW-INFO (flow information).

H-Length: indicates a total length of an entire application information header.

FLOW-INFO: is a variable-length field, and may include one or more information segments (INFO). Each information segment (INFO) includes three fields: TYPE (type), T-Length (length), and Sub-information (sub-information). For specific meanings of the three fields, refer to Table 1.

TYPE indicates a type of the subsequent sub-information field.

T-Length indicates a length of the INFO field.

Sub-information indicates specific information content carried in the INFO field.

**Table 1**

| **TYPE** | **T-Length** | **Sub-information** (**specific information content**) |
|---|---|---|
| Application flow ID | xx | ID: a service data ID specified by an encapsulation device |
| Flow meta information | xx | IP, PORT (port), and PROTOCOL (protocol) |
| Priority | xx | For example, numbers 0 to 8 are used, and there are nine priorities in total. A larger number indicates a higher priority. There may be another priority representation manner |
| Service type | xx | Text, picture, video (live/VOD), VoIP, game, and the like |
| Root domain name (root domain name) | xx | Root domain name |
| URI (Uniform Resource Identifier, uniform resource identifier) | xx | |
| Stream ID | xx | Stream ID in an HTTP 2.0 frame header, specified by an application layer |

S130. The server provides the first service data and the application information for an awareness node.

The server provides the application information for the awareness node, so that the awareness node obtains the service information of the service data transmitted by the server to the terminal device, and accordingly a service awareness system completes a service related to the service information.

In some embodiments of the present invention, an encapsulation device is deployed inside the server. The server re-encapsulates the first service data and the application information by using the encapsulation device, and forwards, to the awareness node, a packet obtained through re-encapsulation.

In some other embodiments of the present invention, an encapsulation device is deployed independent of the server. The server sends the first service data and the application information to the encapsulation device. The encapsulation device re-encapsulates the first service data and the application information, and then forwards, to the awareness node, a packet obtained through re-encapsulation.

In another embodiment of the present invention, the server may directly provide the application information and the first service data for the awareness node.

The foregoing several specific implementations are described below in detail, and details are not described herein.

S140. The awareness node identifies service information of the first service data by using the application information.

The awareness node determines the service information of the first service data based on the received application information, for example, information such as a service type.

S150. The awareness node forwards the first service data, or the first service data and the application information.

In some embodiments of the present invention, the awareness node may forward only the first service data to a next node, and does not need to forward the application information.

In some other embodiments of the present invention, the awareness node may forward both the first service data and the application information to a next node.

The next node may be a terminal device, a next awareness node, or another service awareness system (such as a parent-child account system). According to the data transmission method provided in this embodiment, in a process in which the server sends encrypted service data to the terminal device, the server transmits, to the awareness node, application information needed by the awareness node, so that the awareness node can learn of, based on the application information, service information of the encrypted service data transmitted between the terminal device and the server, and accordingly the service awareness system completes a service related to service content. The application information is transmitted in a plaintext manner, and the server does not need to additionally increase an encryption/decryption protocol stack. Data transmission is more convenient and system costs are lower while it is ensured that the service data between the terminal device and the server is encrypted.

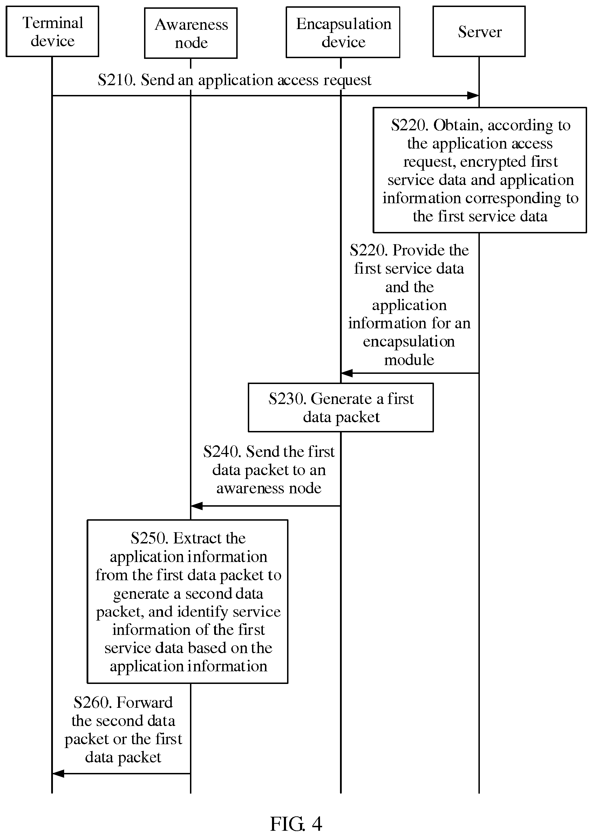

Referring to FIG. 4, FIG. 4 is a flowchart of a data transmission method according to an embodiment of the present invention. The method is applied to the system shown in FIG. 1. In this embodiment, an encapsulation device is deployed independent of a server. For example, the encapsulation device may be any device that can decapsulate and encapsulate data. As shown in FIG. 4, the data transmission method includes the following steps.

S210. A terminal device sends an application access request to a server.

S220. The server obtains, based on the received application access request, encrypted first service data and application information corresponding to the first service data, and sends the first service data and the application information to an encapsulation device.

The encapsulation device is independent of the server. The server sends the application information to the encapsulation device through a network connection by sending a message, to instruct the encapsulation device to re-encapsulate the application information and the service data.

S230. The encapsulation device generates a first data packet, where the first data packet includes a message header and a payload, the message header carries the application information, and the payload carries the first service data.

After receiving the application information sent by the server, the encapsulation device locally caches the application information, and returns acknowledgement information to the server. Then, the encapsulation device receives the first service data sent by the server, and queries, based on characteristic information of the first service data (for example, the characteristic information of the service data may be a 5-tuple, and the 5-tuple includes a source IP address, a source port, a destination IP address, a destination port, and a transport layer protocol, and is used to distinguish between different data packets), whether application information that matches the first service data exists locally. If the application information exists, the encapsulation device modifies the first service data, re-encapsulates a packet header of the first service data, and writes, into the packet header of the first service data, the application information that matches the first service data, to generate the first data packet. The application information may be written into an optional field in the packet header, or a new field may be added to the packet header to carry the application information.

S240. The encapsulation device sends the first data packet to an awareness node.

The encapsulation device sends, to the awareness node, the first data packet obtained through re-encapsulation.

S250. The awareness node extracts the application information from the first data packet to generate a second data packet, and identifies service information of the first service data based on the application information, where the second data packet includes the first service data.

The awareness node parses the received first data packet to determine whether the application information is carried in the first data packet; if the application information is carried, extracts the application information from the first data packet, and queries whether the application information exists in a local flow table (the flow table is used to store application information corresponding to each piece of received service data); and if a corresponding flow entry already exists, refreshes, based on the received application information, flow application information recorded in the flow entry; or if a corresponding flow entry does not exist, adds a flow entry, records the received application information, and inserts the flow entry into the flow table. In an initial state, there is no flow entry for application information in the flow table.

S260. The awareness node forwards the second data packet or the first data packet.

The second data packet includes the first service data, and the first data packet includes the first service data and the application information corresponding to the first service data.

In some application scenarios in the present invention, data sending and receiving consistency between the terminal device and the server needs to be ensured. Therefore, in these application scenarios, the awareness node needs to restore, to the original first service data, the first data packet obtained after the encapsulation device performs re-encapsulation. The awareness node removes the application information from the packet header of the first data packet, restores a packet of the first data packet to a packet of the first service data, and forwards the packet of the first service data to a next node.

In some other application scenarios in the present invention, there is no need to ensure that data received by the terminal device is totally consistent with data sent by the server. Therefore, in these application scenarios, the awareness node may directly forward, to a next node, the first data packet obtained after the encapsulation device performs re-encapsulation.

The system shown in FIG. 1 may include a plurality of awareness nodes, and a specific awareness node on which a service data packet is specifically restored may be determined based on an awareness node provider.

According to the data transmission method provided in this embodiment, in a process in which the server sends encrypted service data to the terminal device, the server transmits, to the awareness node, application information needed by the awareness node, so that the awareness node learns of, based on the application information, service information of the encrypted service data transmitted between the terminal device and the server, and accordingly a service awareness system completes a service related to the service information. The application information is transmitted in a plaintext manner, and the server does not need to additionally increase an encryption/decryption protocol stack. Data transmission is more convenient and system costs are lower while it is ensured that the service data between the terminal device and the server is encrypted.

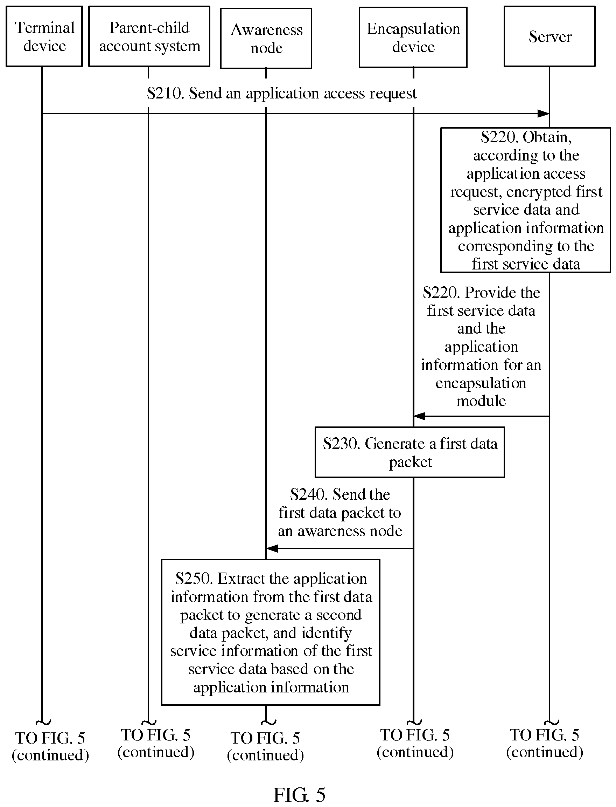

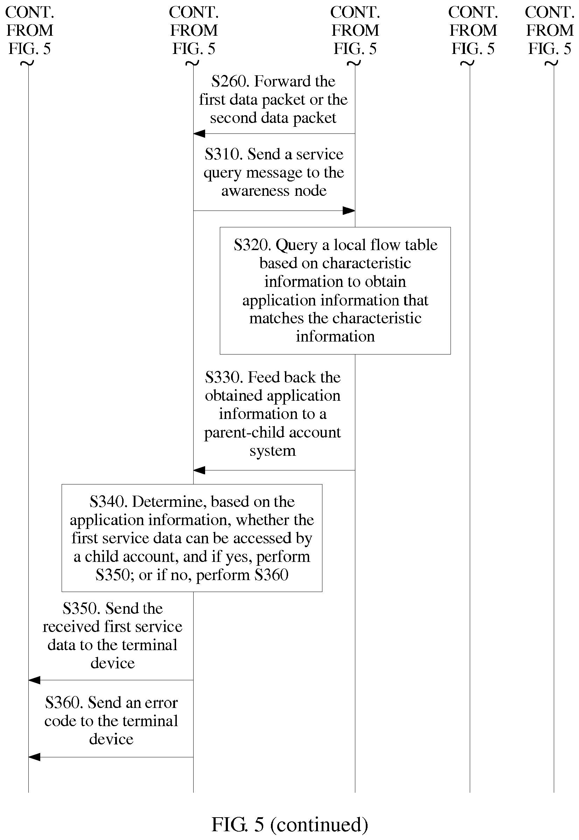

Referring to FIG. 5, FIG. 5 is a flowchart of another data transmission method according to an embodiment of the present invention. In this embodiment, a parent-child account system is used as an example to describe a scenario in which the parent-child account system and the system shown in FIG. 1 complete a content filtering service by using the data transmission method shown in FIG. 4.

The parent-child account system is used to perform filtering based on Internet data content to filter out data that is unsuitable for a child to access, thereby ensuring a healthy and secure Internet access environment for a child.

Steps S210 to S260 in FIG. 5 are the same as steps with same numbers in FIG. 4, and details are not described herein again. In S260, the awareness node forwards the first data packet or the second data packet to the parent-child account system. The first data packet includes the first service data and the application information corresponding to the first service data, and the second data packet includes the first service data.

S310. The parent-child account system sends a service query message to the awareness node. The service query message is used to query the awareness node about the application information of the first service data. The service query message carries characteristic information of the first service data, for example, 5-tuple information.

S320. After receiving the service query message, the awareness node queries a local flow table based on the characteristic information to obtain application information that matches the characteristic information.

After receiving the service query message, the awareness node queries, based on the characteristic information that is of the service data and that is carried in the query message, whether a flow entry that matches the characteristic information exists in the local flow table; and obtains application information in the flow entry if the flow entry exists; or ends a current procedure if the flow entry does not exist.

S330. The awareness node feeds back the obtained application information to the parent-child account system.

S340. The parent-child account system determines, based on the application information, whether the first service data can be accessed by a child account, and if yes, performs S350; or if no, performs S360.

S350. Send the received first service data to the terminal device.

S360. Send an error code to the terminal device, for example, 403 Forbidden.

A data transmission service in another service that is based on service awareness is similar to the parent-child account service, and is not described herein.

According to the data transmission method provided in this embodiment, the awareness node sends, to a service awareness system, the first service data obtained through restoration, and the service awareness system queries the awareness node about the application information of the first service data, so that the service information of the first service data can be identified when the service data is encrypted, to correspondingly process the first service data.

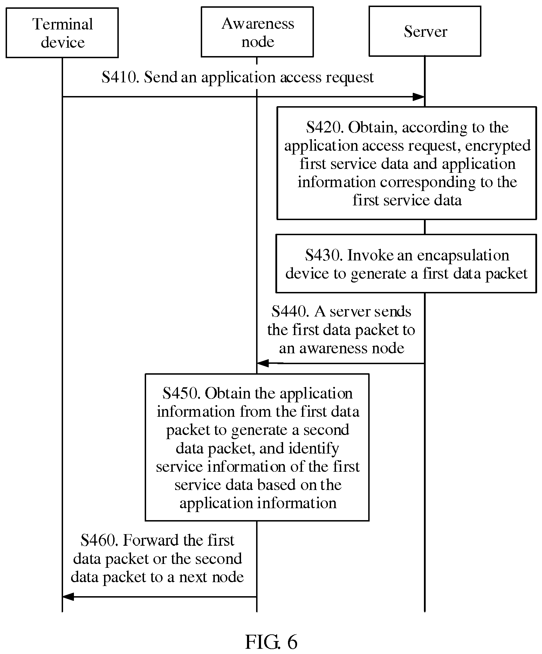

Referring to FIG. 6, FIG. 6 is a flowchart of another data transmission method according to an embodiment of the present invention. The method is applied to the system shown in FIG. 1. In this embodiment, an encapsulation device is deployed inside a server. For example, a related function is implemented in a protocol stack of the server. To be specific, service data sent by the server includes application layer information. The application layer information is stored in a plaintext form. As shown in FIG. 6, the method includes the following steps.

S410. A terminal device sends an application access request to a server.

S420. The server obtains, based on the received application access request, encrypted first service data and application information corresponding to the first service data.

S430. The server invokes an encapsulation device to generate a first data packet. The first data packet includes a message header and a payload, the message header carries the application information, and the payload carries the first service data.

The server may invoke the encapsulation device by calling an extended Sockets API (Application Programming Interface, application programming interface) function.

S440. The server sends the first data packet to an awareness node.

S450. The awareness node obtains the application information from the first data packet to generate a second data packet, and identifies service information of the first service data based on the application information, where the second data packet includes the first service data.

S460. The awareness node forwards the second data packet or the first data packet to a next node.

In some embodiments of the present invention, the encapsulation device is deployed inside the server. In other words, the first data packet output by the server carries the application information. Therefore, to ensure data sending and receiving consistency between the terminal device and the server, the awareness node does not need to modify a packet of the first data packet, and may directly forward the packet to the next node.

According to the data transmission method provided in this embodiment, the encapsulation device deployed inside the server re-encapsulates the application information and the first service data, to obtain the first data packet and send the first data packet to the awareness node. The awareness node obtains the application information from the first data packet, and identifies the service information of the first service data based on the application information. In addition, the awareness node does not need to modify the first data packet, and may directly forward the first data packet to the next node. According to the method, a function of the encapsulation device needs to be integrated on a server side, but the awareness node does not need to modify the first data packet.

Application information may be directly carried in a packet of a service data flow. This manner is referred to as an in-band transmission manner. Alternatively, application information may be transmitted independent of a service data flow. This manner is referred to as an out-of-band transmission manner. In the in-band transmission manner, the application information may be written into a protocol header used for transmitting the service data flow, for example, the TCP protocol, the TLS (Transport Layer Security, Transport Layer Security) protocol, the IP (Internet Protocol, Internet Protocol) protocol, and UDP (User Datagram Protocol, User Datagram Protocol). The present invention sets no limitation thereto. A specific protocol header that is to carry the application information needs to be determined based on a specific application scenario. The out-of-band transmission manner means that application information is independent of a service data flow between a terminal device and a server. For example, the application information may be independently carried by using an ICMP (Internet Control Message Protocol, Internet Control Message Protocol) protocol packet or another protocol packet. The present invention sets no limitation thereto.

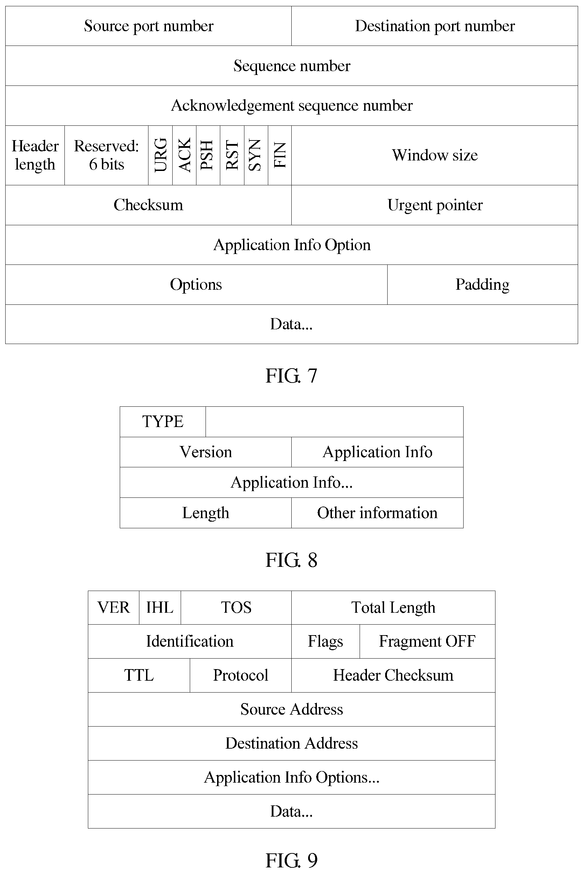

The following several application scenarios are separately described below with reference to FIG. 7 to FIG. 10.

In an application scenario in which the TCP (Transmission Control Protocol, Transmission Control Protocol) protocol is used as a transport layer protocol between a terminal device and a server, application information may be carried in a TCP protocol packet.

Referring to FIG. 7, FIG. 7 is a schematic diagram of a message format of a TCP protocol packet according to an embodiment of the present invention. The application information may be filled in an optional field in the TCP protocol.

Meanings of fields in the TCP protocol packet are as follows:
Source port number: 16 bits, identifying a port number of a remote end.

Destination port number: 16 bits, identifying a port number of a local end.

Sequence number: 32 bits, indicating a sequence of a sent datagram.

Acknowledgment sequence number: 32 bits, a sequence number of a next datagram that is expected to be received.

Header length: 4 bits, indicating a quantity of 32-bit words included in a TCP header.

The subsequent six bits are reserved and not used.

URG (urgent bit): When URG = 1, it indicates that the packet should be transmitted as soon as possible, and does not need to be transmitted in an original queue sequence. A TCP urgent manner is a manner in which a transmit end sends urgent data to the other end, and is used together with an urgent pointer field. An urgent pointer points to a byte in a datagram, and indicates that a first byte to the byte to which the urgent pointer points in the datagram are urgent data, and are directly delivered to an upper-layer process without entering a receiving buffer. Other data enters the receiving buffer.

ACK (Acknowledgement, acknowledgement character): If ACK is 1, it indicates that the acknowledgement sequence number is valid. If ACK is 0, it indicates that a datagram does not include acknowledgement information, and that the acknowledgement field is omitted.

PSH (Push, push): When PSH is 1, it indicates that the packet is data with a PUSH flag, and a receiver requests a datagram to be immediately transmitted to an application program without waiting until a buffer is full.

RST (reset): indicates a connection reset request, and is used to reset an error connection that occurs due to a host crash or another cause, or may be used to reject an invalid datagram or reject a connection request.

SYN (synchronous sequence number): is used to establish a connection.

FIN (Final, final signal): indicates that a transmit end has reached an end of data. To be specific, data transmission between two parties is completed, and a connection is to be disconnected.

Window size: 16 bits, indicating a quantity of bytes that can be further sent after a byte is determined.

Checksum: 16 bits, specified to ensure high reliability. It checks a sum of a header, data, and a pseudo TCP header.

Application Info Option (application information option): 0 or more 32-bit words. The field in this embodiment is used to carry application information of service data. The field includes two fields: an Option (option) field and a Padding (padding) field, and the Option field carries the application information.

Data (data): The field is used to carry service data.

In an application scenario in which the TLS protocol is used as a transport layer encryption protocol between a terminal device and a server, application information of service data may be written into a TLS protocol packet header in a plaintext manner.

Referring to FIG. 8, FIG. 8 is a schematic diagram of a message format of a TLS protocol packet according to an embodiment of the present invention. The application information may be written between a Version field and a Length field in a TLS header.

As shown in FIG. 8, meanings of fields in the TLS protocol packet are as follows:
TYPE (type): indicates a type of a subsequent field.

Version (version): indicates protocol version information.

Application Info (application information): The field is the written application information, and a message format of the application information is shown in FIG. 3.

Length (length): indicates a length of a TLS frame header, and is used to indicate a location of the application information in a TLS data frame.

A person skilled in the art may understand that, for some transport layer protocols such as TCP and UDP, some check and length fields are added to transport layer headers. When modifying the TLS header by writing the application information into the TLS header, an encapsulation device needs to modify a related field in a header of a transport layer underlying protocol, to avoid a subsequent processing error of a node.

In an application scenario in which a terminal device and a server use IP as a bearer protocol (basically, the IP protocol is used for all Internet traffic), application information may be written into an IP header.

Referring to FIG. 9, FIG. 9 is a schematic diagram of a message format of an IPv4 protocol packet according to an embodiment of the present invention. The application information is filled in an Options field.

Meanings of fields in the IPv4 protocol are as follows:
VER (Version, version number): 4 bits, where a protocol version number is 4, and therefore the protocol is referred to as IPv4.

IHL (Internet Header Length, header length): is a header length, and has 4 bits. The header length is a quantity of 32-bit words occupied by the IP layer header, to be specific, a quantity of quartets included in the IP layer header, including any option.

TOS (Type Of Service, type of service): 8 bits, indicating quality of service expected by an upper-layer protocol for processing a current datagram, and allocating the datagram based on an importance level. The field is used to allocate a priority, a delay, a throughput, reliability, and the like.

Total Length (total length of the IP packet): specifies a length of bytes of the entire IP data packet, including data and a protocol header. A maximum value of the field is 65,535 bytes. Typically, a host may receive a datagram of 576 bytes.

Identification (Identification): 16 bits. The field is used to identify a current datagram. The field is allocated by a transmit end to help a receive end assemble datagram fragments.

Flags (flags): 3 bits. A least significant bit (MF) is used to control fragments, and is set to 1 if there is a next fragment; or otherwise, is sent to 0 to indicate ending of fragments. A middle significant bit (DF) indicates whether a data packet can be fragmented. A third bit, that is, a most significant bit, is reserved and not used, but needs to be 0.

Fragment OFF (Fragment Offset, fragment offset): 13 bits, indicating a location of fragment data relative to a beginning of a source datagram, and supporting a destination IP in properly reconstructing the source datagram.

TTL (Time to Live, time to five): 8 bits. The field is a counter. A value is decreased by 1 at each point at which a datagram is discarded, until the value is decreased to 0. This ensures an endless loop process for a data packet.

Protocol (protocol): 8 bits, indicating a specific upper-layer protocol for receiving and importing a data packet after an IP processing process is completed.

Header Checksum (header check): 16 bits, helping ensure integrity of the IP protocol header. Since some protocol header fields are changed (such as TTL), re-computation and verification need to be performed at each point that the Internet Protocol header needs to be processed.

Source Address (source address): 32 bits, a source host IP address.

Destination Address (target address): 32 bits, a target host IP address.

Application Info Options (application information option): The field is used to fill the application information, and a message format of the application information is shown in FIG. 3.

Data (data): is a data field.

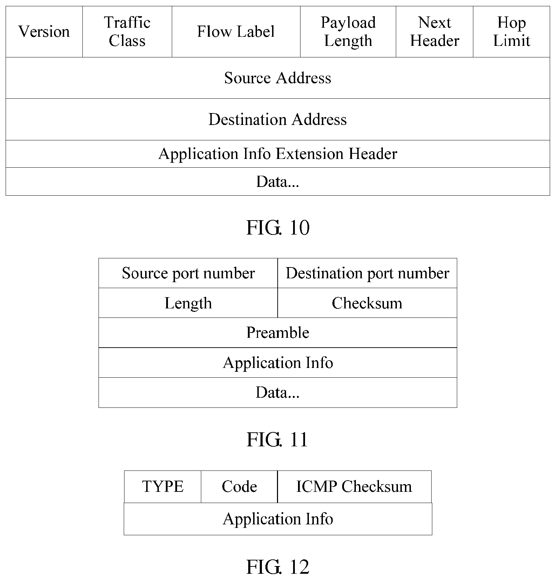

Referring to FIG. 10, FIG. 10 is a schematic diagram of a message format of an IPv6 protocol packet according to an embodiment of the present invention. Application information is in an IPv6 extension header (extension header) field.

As shown in FIG. 10, meanings of fields included in an IPv6 header are as follows:
Version (version number): 4 bits, an IP protocol version number, where an IPv6 version number is 6.

Traffic Class (traffic class): 8 bits, indicating a traffic class or a priority of an IPv6 data flow. A function is similar to that of an IPv4 TOS field.

Flow Label (flow label): 20 bits, a new IPv6 field, labeling a data flow that needs to be specially processed by an IPv6 router. The field is used for some communication that has special requirements for quality of service of connections, for example, transmission of real-time data such as an audio or a video. In the IPv6, there may be a plurality of different data flows between a source and a destination, and a non-zero flow label is used to distinguish between the data flows. A value of the field is set to "0" if a router is not required to perform special processing.

Payload Length (payload length): 16 bits. The payload length includes an extension header and an upper-layer PDU (Packet Data Unit, packet data unit), and 16 bits may indicate a payload length of a maximum of 65535 bytes. If a payload exceeds the quantity of bytes, a value of the field is set to "0", and a jumbo payload (Jumbo Payload) option in a hop-by-hop (Hop-by-Hop) option in the extension header is used.

Next Header (next header): 8 bits, identifying a type of a header immediately following the IPv6 header, such as the extension header (if any) or a transport layer protocol header (such as TCP, UDP, or ICMPv6).

Hop Limit (hop limit): 8 bits, similar to an IPv4 TTL field. A quantity of times of forwarding a data packet between routers is used to limit a lifetime of the packet. Each time the data packet is forwarded, the field is decreased by 1, and the packet is discarded when the field is decreased to 0.

Source Address (source address): 128 bits, a sender host address.

Destination Address (destination address): 128 bits. In most cases, the destination address is a destination address. However, if an extension header exists, the destination address may be an interface of a next router in a sender routing table.

Application Info Extension Header (application information extension header): The application information is filled in the field.

Data (data): Data is filled in the field.

In an application scenario in which a service data flow between a terminal device and a server is transmitted based on the UDP protocol, application information may be written into a field following a UDP protocol header.

Referring to FIG. 11, FIG. 11 is a schematic diagram of a message format of the UDP protocol according to an embodiment of the present invention. As shown in FIG. 11, meanings of fields included in the UDP protocol are as follows:

Source port number: is a port number of a remote end.

Destination port number: is a port number of a local end.

Length: is a length of an entire header in a unit of byte.

Checksum: ensures high reliability and checks a sum of the header and data.

Preamble (added field): is used to identify that subsequent data includes application information.

Application Info (application information): identifies the application information corresponding to the service data flow between the terminal device and the server.

Data: The field is a data field.

In some other embodiments of the present invention, alternatively, application information may be transmitted in an out-of-band transmission manner. To be specific, the application information is independent of a service data flow between a terminal device and a server. The application information and the service data flow are separately and independently transmitted. Therefore, an association between the service data flow and the application information needs to be further established. For example, the application information includes characteristic information of the service data flow between the terminal device and the server, for example, a 5-tuple or a characteristic string, so that after receiving the application information, an awareness node can map the application information and service data based on the characteristic information, so as to correctly establish a local application information flow table.

Referring to FIG. 12, FIG. 12 is a schematic diagram of a message format of the ICMP protocol according to an embodiment of the present invention. Application information may be written into the ICMP protocol. As shown in FIG. 12, meanings of fields included in the ICMP protocol are as follows:
TYPE (type): 8 bits, identifying a type of an ICMP packet.

Code (code): 8 bits. The field and the TYPE field together determine the type of the ICMP packet.

ICMP Checksum (ICMP packet checksum): is a checksum of the entire ICMP packet including data.

Application Info (application information): The field carries the application information, and the field should further include characteristic information of a service data flow.

The following describes operations of nodes when application information is transmitted in an out-of-band transmission manner. A server transmits the application information and characteristic information of service data corresponding to the application information to an encapsulation device. The encapsulation device generates a notification message based on the application information and the characteristic information of the service data. The notification message includes the application information and the characteristic information, and is transmitted to an awareness node. The awareness node parses the received notification message to obtain the application information and the characteristic information of the service data, and establishes an application information flow table. In addition, the server sends a service data flow to the encapsulation device. The encapsulation device does not modify the service data flow, and directly forwards the service data flow to the awareness node. The awareness node then forwards the service data to a next node (a terminal device, another service system that is based on service awareness, or a next awareness node).

In another scenario, when application information is transmitted in an out-of-band transmission manner, no modification needs to be made to a service data flow. Therefore, the encapsulation device may not be disposed in this application scenario. In this way, the server encapsulates, in a notification message of a specified protocol format, application information and characteristic information corresponding to service data, and then sends the notification message to an awareness node. The awareness node parses the notification message to obtain the application information, and establishes an application information flow table. In addition, the server sends the service data flow to the awareness node, and the awareness node queries the application information flow table by using the characteristic information of the service data, to learn of the application information of the service data flow. Then, the awareness node forwards the service data flow to a next node.

Corresponding to the foregoing embodiments of the data transmission methods, this application further provides corresponding apparatus embodiments.

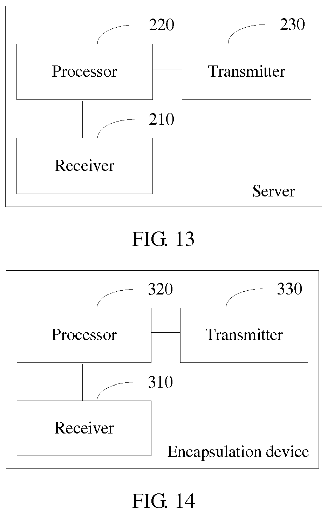

Referring to FIG. 13, FIG. 13 is a block diagram of a server according to an embodiment of the present invention. The server is applied to an Internet communications system. The system includes a terminal device, the server, and an awareness node. As shown in FIG. 13, the server includes a receiver 210, a processor 220, and a transmitter 230.

The receiver 210 is configured to: receive an application access request sent by the terminal device, and transmit the application access request to the processor 220.

The processor 220 is configured to obtain, according to the application access request transmitted by the receiver 210, encrypted first service data and application information corresponding to the first service data. The application information is used to represent service information of the first service data.

The transmitter 230 is configured to provide, for the awareness node, the first service data and the application information that are obtained by the processor 220, so that the awareness node identifies the service information of the first service data by using the application information.

In some embodiments of this application, the processor 220 is configured to generate a first data packet based on the first service data and the corresponding application information. The first data packet includes a message header and a payload, the message header carries the application information, and the payload carries the first service data. The transmitter 230 sends, to the awareness node in the Internet communications system, the first data packet generated by the processor 220.

In some other embodiments of this application, the Internet communications system further includes an encapsulation device configured to re-encapsulate data. In this application scenario, the transmitter 230 sends the application information and the first service data to the encapsulation device. The encapsulation device generates a first data packet based on the application information and the first service data, and the encapsulation device sends the first data packet to the awareness node. The first data packet generated by the encapsulation device includes a message header and a payload, the message header carries the application information, and the payload carries the first service data.

Regardless of the first data packet generated by the server or the first data packet generated by the encapsulation device, the application information is carried in a packet of the first service data for transmission. In other words, an in-band transmission manner is used. In this transmission manner, the message header included in the first data packet may include a TCP packet header, a TLS packet header, an IP packet header, or a UDP packet header.

In some other embodiments of this application, alternatively, the application information may be transmitted in an out-of-band transmission manner. To be specific, the application information is not carried in the service data transmitted between the terminal device and the server. In other words, the service data and the application information of the service data are separately and independently transmitted. In this application scenario, an association between the service data and the application information needs to be established, so that the awareness node learns of the application information associated with the service data.

The transmitter 230 sends the first service data to the awareness node, and sends the application information corresponding to the first service data and characteristic information of the first service data to the awareness node, so that the awareness node establishes an association between the first service data and the application information based on the characteristic information, and accordingly the awareness node identifies the service information of the first service data based on the application information.

In some embodiments of this application, when the application information is transmitted in an out-of-band transmission manner, the server sends the application information and the characteristic information of the first service data to the encapsulation device. The encapsulation device generates a notification message based on the application information and the characteristic information. A message header of the notification message includes the application information and the characteristic information. Then the encapsulation device sends the notification message to the awareness node.

In some other embodiments of this application, the processor 220 of the server directly generates a notification message based on the application information and the characteristic information of the first service data. A message header of the notification message carries the application information and the characteristic information.

According to the server provided in this embodiment, in a process of sending encrypted service data to the terminal device, the server transmits, to the awareness node, application information needed by the awareness node, so that the awareness node can learn of, based on the application information, service information of the encrypted service data transmitted between the terminal device and the server, and accordingly a service awareness system completes a service related to service content. The application information is transmitted in a plaintext manner, and the server does not need to additionally increase an encryption/decryption protocol stack. Data transmission is more convenient and system costs are lower while it is ensured that the service data between the terminal device and the server is encrypted.

Referring to FIG. 14, FIG. 14 is a block diagram of an encapsulation device according to an embodiment of the present invention. The encapsulation device is applied to an Internet communications system. The system includes a server, an awareness node, and a terminal device. As shown in FIG. 14, the encapsulation device includes a receiver 310, a processor 320, and a transmitter 330.

The receiver 310 is configured to receive first service data and application information corresponding to the first service data that are sent by the server.

The processor 320 is configured to generate a first data packet based on the first service data and the application information. The first data packet includes a message header and a payload, the message header carries the application information, and the payload carries the first service data.

The transmitter 330 is configured to send the first data packet to the awareness node, so that the awareness node identifies service information of the first service data based on the application information.

In some embodiments of this application, the encapsulation device needs to re-encapsulate the application information and characteristic information that are corresponding to the first service data and that are sent by the server. In this application scenario, the receiver 310 is configured to receive the application information and the characteristic information that are of the first service data and that are sent by the server. The processor 320 is configured to generate a notification message based on the received application information and the received characteristic information, and add the application information and the characteristic information to a message header of the notification message. The transmitter 330 is configured to send, to the awareness node, the notification message generated by the processor 320, so that the awareness node establishes an association between the first service data and the application information based on the characteristic information, and accordingly the awareness node identifies the service information of the first service data based on the application information.

The encapsulation device provided in this embodiment generates the first data packet based on the received first service data and the corresponding application information that are sent by the server, to be specific, writes the application information into a message header of the first service data, so that the awareness node can obtain the application information of the first service data when receiving the first service data, and identify the service information of the first service data based on the application information, to complete a service related to service content. The application information is transmitted in a plaintext manner, and the server does not need to additionally increase an encryption/decryption protocol stack. Data transmission is more convenient and system costs are lower while it is ensured that the service data between the terminal device and the server is encrypted.

The embodiments in this specification are all described in a progressive manner, for same or similar parts in the embodiments, refer to these embodiments, and each embodiment focuses on a difference from other embodiments. Especially, apparatus or system embodiments are basically similar to a method embodiment, and therefore are described briefly. For related parts, refer to partial descriptions in the method embodiment. The described apparatus and system embodiments are merely examples. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of the embodiments. A person of ordinary skill in the art may understand and implement the embodiments of the present invention without creative efforts.

It should be noted that in this specification, relational terms such as "first" and "second" are only used to distinguish one entity or operation from another, and do not necessarily require or imply that any actual relationship or sequence exists between these entities or operations. In addition, the terms "include", "contain", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

The foregoing descriptions are merely specific implementations of the present invention. It should be noted that a person of ordinary skill in the art may make several improvements or polishing without departing from the principle of the present invention and the improvements or polishing shall fall within the protection scope of the present invention.

## Claims

1. A data transmission method, applied to a system that is based on Internet communications, wherein the system comprises a terminal device, a server, and an awareness node, and the method comprises:
receiving, by the server, an application access request sent by the terminal device;
obtaining, by the server according to the application access request, encrypted service data and application information corresponding to the encrypted service data, wherein the encrypted service data is in ciphertext form, and wherein the application information is in plaintext form and is used to represent service information of the service data;
providing, by the server, the application information and the encrypted service data for the awareness node;
identifying, by the awareness node, the service information of the encrypted service data by using the application information; and
forwarding, by the awareness node, the encrypted service data, or the encrypted service data and the application information.

2. The method according to claim 1, wherein the providing, by the server, the application information and the encrypted service data for the awareness node comprises:
generating, by the server, a data packet, wherein the data packet comprises a message header and a payload, the message header carries the application information, and the payload carries the encrypted service data; and
sending, by the server, the data packet to the awareness node.

3. The method according to claim 1, wherein the Internet communications system further comprises an encapsulation device configured to re-encapsulate data; and
the providing, by the server, the application information and the encrypted service data for the awareness node comprises:
sending, by the server, the application information and the encrypted service data to the encapsulation device;
generating, by the encapsulation device, a data packet, wherein the data packet comprises a message header and a payload, the message header carries the application information, and the payload carries the encrypted service data; and
sending, by the encapsulation device, the data packet to the awareness node.

4. The method according to claim 2 or 3, wherein the data packet is constructed based on any one of the following protocols: the Transmission Control Protocol, TCP, the Transport Layer Security, TLS Protocol, the Internet Protocol, IP, and the User Datagram Protocol, UDP.

5. The method according to claim 1, wherein the providing, by the server, the application information and the encrypted service data for the awareness node comprises:
sending, by the server, the encrypted service data to the awareness node; and
sending, by the server, the application information and characteristic information of the encrypted service data to the awareness node, so that the awareness node establishes an association between the encrypted service data and the application information based on the characteristic information.

6. The method according to claim 5, wherein
the sending, by the server, the application information and characteristic information of the encrypted service data to the awareness node comprises:
generating, by the server, a notification message, wherein the notification message comprises the application information and the characteristic information; and
sending, by the server, the notification message to the awareness node.

7. The method according to claim 5, wherein the Internet communications system comprises an encapsulation device configured to re-encapsulate data; and
the sending, by the server, the application information and characteristic information of the encrypted service data to the awareness node comprises:
sending, by the server, the application information and the characteristic information to the encapsulation device; and
generating, by the encapsulation device, a notification message, wherein the notification message comprises the application information and the characteristic information; and sending the notification message to the awareness node.

8. An Internet communications system comprising a server, a terminal device, and an awareness node, the server comprising a receiver, a processor, and a transmitter, wherein
the receiver is configured to receive an application access request sent by the terminal device;
the processor is configured to obtain, according to the application access request, encrypted service data and application information corresponding to the encrypted service data, wherein the encrypted service data is in ciphertext form, and wherein the application information is in plaintext form and is used to represent service information of the service data; and
the transmitter is configured to provide the application information and the encrypted service data for the awareness node, so that the awareness node identifies the service information of the encrypted service data by using the application information.

9. The Internet communications system according to claim 8, wherein
the processor is further configured to generate a data packet, wherein the data packet comprises a message header and a payload, the message header carries the application information, and the payload carries the encrypted service data; and
the transmitter is configured to send the data packet to the awareness node.

10. The Internet communications system according to claim 8, wherein the Internet communications system further comprises an encapsulation device configured to re-encapsulate data; and
when providing the application information and the encrypted service data for the awareness node, the transmitter is specifically configured to:
send, by the transmitter, the application information and the encrypted service data to the encapsulation device, so that the encapsulation device generates a data packet and sends the data packet to the awareness node, wherein the data packet comprises a message header and a payload, the message header carries the application information, and the payload carries the encrypted service data.

11. The Internet communications system according to claim 9 or 10, wherein the data packet is constructed based on any one of the following protocols: the Transmission Control Protocol, TCP, the Transport Layer Security, TLS, Protocol, the Internet Protocol, IP, and the User Datagram Protocol, UDP.

12. The Internet communications system according to claim 8, wherein when providing the application information and the encrypted service data for the awareness node, the transmitter is specifically configured to:
send the encrypted service data to the awareness node; and
send the application information and characteristic information of the encrypted service data to the awareness node, so that the awareness node establishes an association between the encrypted service data and the application information based on the characteristic information.

13. The Internet communications system according to claim 12, wherein that the transmitter sends the application information and characteristic information of the encrypted service data to the awareness node specifically comprises:
the processor is further configured to generate a notification message, wherein the notification message comprises the application information and the characteristic information; and
the transmitter is configured to send the notification message to the awareness node.

14. The Internet communications system according to claim 12, wherein the Internet communications system comprises an encapsulation device configured to re-encapsulate data; and
when sending the application information and the characteristic information of the encrypted service data to the awareness node, the transmitter is specifically configured to:
the transmitter is configured to send the application information and the characteristic information to the encapsulation device, so that the encapsulation device generates a notification message, wherein the notification message comprises the application information and the characteristic information; and the encapsulation device sends the notification message to the awareness node.

## Patentansprüche

1. Datenübertragungsverfahren, das auf ein System angewendet wird, das auf Internetkommunikation basiert, wobei das System ein Endgerät, einen Server und einen Bewusstseinsknoten umfasst und das Verfahren Folgendes umfasst:
Empfangen, durch den Server, einer Anwendungszugriffsanforderung, die durch das Endgerät gesendet wird;
Erhalten, durch den Server gemäß der Anwendungszugriffsanforderung, verschlüsselter Dienstdaten und Anwendungsinformationen, die den verschlüsselten Dienstdaten entsprechen, wobei die verschlüsselten Dienstdaten in Chiffretextform vorliegen und wobei die Anwendungsinformationen in Klartextform vorliegen und verwendet werden, um Dienstinformationen der Dienstdaten darzustellen;
Bereitstellen, durch den Server, der Anwendungsinformationen und der verschlüsselten Dienstdaten für den Bewusstseinsknoten;
Identifizieren, durch den Bewusstseinsknoten, der Dienstinformationen der verschlüsselten Dienstdaten unter Verwendung der Anwendungsinformationen; und
Weiterleiten, durch den Bewusstseinsknoten, der verschlüsselten Dienstdaten oder der verschlüsselten Dienstdaten und der Anwendungsinformationen.

2. Verfahren nach Anspruch 1, wobei das Bereitstellen, durch den Server, der Anwendungsinformationen und der verschlüsselten Dienstdaten für den Bewusstseinsknoten Folgendes umfasst:
Erzeugen, durch den Server, eines Datenpakets, wobei das Datenpaket einen Nachrichtenkopf und Nutzdaten umfasst, der Nachrichtenkopf die Anwendungsinformationen enthält und die Nutzdaten die verschlüsselten Dienstdaten enthalten; und
Senden, durch den Server, des Datenpakets an den Bewusstseinsknoten.

3. Verfahren nach Anspruch 1, wobei das Internetkommunikationssystem ferner eine Einkapselungsvorrichtung umfasst, die dazu konfiguriert ist, Daten erneut einzukapseln; und
das Bereitstellen, durch den Server, der Anwendungsinformationen und der verschlüsselten Dienstdaten für den Bewusstseinsknoten Folgendes umfasst:
Senden, durch den Server, der Anwendungsinformationen und der verschlüsselten Dienstdaten an die Einkapselungsvorrichtung;
Erzeugen, durch die Einkapselungsvorrichtung, eines Datenpakets, wobei das Datenpaket einen Nachrichtenkopf und Nutzdaten umfasst, der Nachrichtenkopf die Anwendungsinformationen enthält und die Nutzdaten die verschlüsselten Dienstdaten enthalten; und
Senden, durch die Einkapselungsvorrichtung, des Datenpakets an den Bewusstseinsknoten.

4. Verfahren nach Anspruch 2 oder 3, wobei das Datenpaket basierend auf einem der folgenden Protokolle aufgebaut ist: dem Transmission Control Protocol, TCP, dem Transport Layer Security, TLS, Protocol, dem Internet Protocol, IP, und dem User Datagram Protocol, UDP.

5. Verfahren nach Anspruch 1, wobei das Bereitstellen, durch den Server, der Anwendungsinformationen und der verschlüsselten Dienstdaten für den Bewusstseinsknoten Folgendes umfasst:
Senden, durch den Server, der verschlüsselten Dienstdaten an den Bewusstseinsknoten; und
Senden, durch den Server, der Anwendungsinformationen und charakteristischer Informationen der verschlüsselten Dienstdaten an den Bewusstseinsknoten, sodass der Bewusstseinsknoten eine Zuordnung zwischen den verschlüsselten Dienstdaten und den Anwendungsinformationen basierend auf den charakteristischen Informationen herstellt.

6. Verfahren nach Anspruch 5, wobei
das Senden, durch den Server, der Anwendungsinformationen und der charakteristischen Informationen der verschlüsselten Dienstdaten an den Bewusstseinsknoten Folgendes umfasst:
Erzeugen, durch den Server, einer Benachrichtigungsnachricht, wobei die Benachrichtigungsnachricht die Anwendungsinformationen und die charakteristischen Informationen umfasst; und
Senden, durch den Server, der Benachrichtigungsnachricht an den Bewusstseinsknoten.

7. Verfahren nach Anspruch 5, wobei das Internetkommunikationssystem eine Einkapselungsvorrichtung umfasst, die dazu konfiguriert ist, Daten erneut einzukapseln; und
das Senden, durch den Server, der Anwendungsinformationen und der charakteristischen Informationen der verschlüsselten Dienstdaten an den Bewusstseinsknoten Folgendes umfasst:
Senden, durch den Server, der Anwendungsinformationen und der charakteristischen Informationen an die Einkapselungsvorrichtung; und
Erzeugen, durch die Einkapselungsvorrichtung, einer Benachrichtigungsnachricht, wobei die Benachrichtigungsnachricht die Anwendungsinformationen und die charakteristischen Informationen umfasst; und Senden der Benachrichtigungsnachricht an den Bewusstseinsknoten.

8. Internetkommunikationssystem, das einen Server, ein Endgerät und einen Bewusstseinsknoten umfasst, wobei der Server einen Empfänger, einen Prozessor und einen Sender umfasst, wobei
der Empfänger zum Empfangen einer Anwendungszugriffsanforderung, die durch das Endgerät gesendet wird, konfiguriert ist;
der Server zum Erhalten, gemäß der Anwendungszugriffsanforderung, verschlüsselter Dienstdaten und Anwendungsinformationen, die den verschlüsselten Dienstdaten entsprechen, konfiguriert ist, wobei die verschlüsselten Dienstdaten in Chiffretextform vorliegen und wobei die Anwendungsinformationen in Klartextform vorliegen und verwendet werden, um Dienstinformationen der Dienstdaten darzustellen; und der Sender zum Bereitstellen der Anwendungsinformationen und der verschlüsselten Dienstdaten für den Bewusstseinsknoten konfiguriert ist, sodass der Bewusstseinsknoten die Dienstinformationen der verschlüsselten Dienstdaten unter Verwendung der Anwendungsinformationen identifiziert.

9. Internetkommunikationssystem nach Anspruch 8, wobei
der Prozessor ferner zum Erzeugen eines Datenpakets konfiguriert ist, wobei das Datenpaket einen Nachrichtenkopf und Nutzdaten umfasst, der Nachrichtenkopf die Anwendungsinformationen enthält und die Nutzdaten die verschlüsselten Dienstdaten enthalten; und
der Sender zum Senden des Datenpakets an den Bewusstseinsknoten konfiguriert ist.

10. Internetkommunikationssystem nach Anspruch 8, wobei das Internetkommunikationssystem ferner eine Einkapselungsvorrichtung umfasst, die dazu konfiguriert ist, Daten erneut einzukapseln; und
der Sender beim Bereitstellen der Anwendungsinformationen und der verschlüsselten Dienstdaten für den Bewusstseinsknoten insbesondere zu Folgendem konfiguriert ist:
Senden, durch den Sender, der Anwendungsinformationen und der verschlüsselten Dienstdaten an die Einkapselungsvorrichtung, sodass die Einkapselungsvorrichtung ein Datenpaket erzeugt und das Datenpaket an den Bewusstseinsknoten sendet, wobei das Datenpaket einen Nachrichtenkopf und Nutzdaten umfasst, der Nachrichtenkopf die Anwendungsinformationen enthält und die Nutzdaten die verschlüsselten Dienstdaten enthalten.

11. Internetkommunikationssystem nach Anspruch 9 oder 10, wobei das Datenpaket basierend auf einem der folgenden Protokolle aufgebaut ist: dem Transmission Control Protocol, TCP, dem Transport Layer Security, TLS, Protocol, dem Internet Protocol, IP, und dem User Datagram Protocol, UDP.

12. Internetkommunikationssystem nach Anspruch 8, wobei der Sender beim Bereitstellen der Anwendungsinformationen und der verschlüsselten Dienstdaten für den Bewusstseinsknoten insbesondere zu Folgendem konfiguriert ist:
Senden der verschlüsselten Dienstdaten an den Bewusstseinsknoten; und
Senden der Anwendungsinformationen und charakteristischer Informationen der verschlüsselten Dienstdaten an den Bewusstseinsknoten, sodass der Bewusstseinsknoten eine Zuordnung zwischen den verschlüsselten Dienstdaten und den Anwendungsinformationen basierend auf den charakteristischen Informationen herstellt.

13. Internetkommunikationssystem nach Anspruch 12, wobei das Senden durch den Sender der Anwendungsinformationen und der charakteristischen Informationen der verschlüsselten Dienstdaten an den Bewusstseinsknoten insbesondere Folgendes umfasst:
der Prozessor ist ferner zum Erzeugen einer Benachrichtigungsnachricht konfiguriert, wobei die Benachrichtigungsnachricht die Anwendungsinformationen und die charakteristischen Informationen umfasst; und
der Sender ist zum Senden der Benachrichtigungsnachricht an den Bewusstseinsknoten konfiguriert.

14. Internetkommunikationssystem nach Anspruch 12, wobei das Internetkommunikationssystem eine Einkapselungsvorrichtung umfasst, die dazu konfiguriert ist, Daten erneut einzukapseln; und
der Sender beim Senden der Anwendungsinformationen und der charakteristischen Informationen der verschlüsselten Dienstdaten an den Bewusstseinsknoten insbesondere zu Folgendem konfiguriert ist:
der Sender ist zum Senden der Anwendungsinformationen und der charakteristischen Informationen an die Einkapselungsvorrichtung konfiguriert, sodass die Einkapselungsvorrichtung eine Benachrichtigungsnachricht erzeugt, wobei die Benachrichtigungsnachricht die Anwendungsinformationen und die charakteristischen Informationen umfasst; und die Einkapselungsvorrichtung sendet die Benachrichtigungsnachricht an den Bewusstseinsknoten.

## Revendications

1. Procédé de transmission de données, appliqué à un système basé sur des communications Internet, dans lequel le système comprend un dispositif terminal, un serveur et un noeud de sensibilisation, et le procédé comprend :
la réception, par le serveur, d'une demande d'accès à l'application envoyée par le dispositif terminal ;
l'obtention, par le serveur en fonction de la demande d'accès à l'application, de données de service cryptées et d'informations d'application correspondant aux données de service cryptées, dans lequel les données de service cryptées sont sous forme de texte chiffré, et dans lequel les informations d'application sont sous forme de texte brut et sont utilisées pour représenter des informations de service des données de service ;
la fourniture, par le serveur, des informations d'application et des données de service cryptées au noeud de sensibilisation ;
l'identification, par le noeud de sensibilisation, des informations de service des données de service cryptées en utilisant les informations d'application ; et
le transfert, par le noeud de sensibilisation, des données de service cryptées, ou des données de service cryptées et des informations d'application.

2. Procédé selon la revendication 1, dans lequel la fourniture, par le serveur, des informations d'application et des données de service cryptées au noeud de sensibilisation comprend :
la génération, par le serveur, d'un paquet de données, dans lequel le paquet de données comprend un en-tête de message et une charge utile, l'en-tête de message contient les informations d'application, et la charge utile contient les données de service cryptées ; et
l'envoi, par le serveur, du paquet de données au noeud de sensibilisation.

3. Procédé selon la revendication 1, dans lequel le système de communication Internet comprend en outre un dispositif d'encapsulation configuré pour ré-encapsuler des données ; et la fourniture, par le serveur, des informations d'application et des données de service cryptées au noeud de sensibilisation comprend :
l'envoi, par le serveur, des informations d'application et des données de service cryptées au dispositif d'encapsulation ;
la génération, par le dispositif d'encapsulation, d'un paquet de données, dans lequel le paquet de données comprend un en-tête de message et une charge utile, l'en-tête de message contient les informations d'application et la charge utile contient les données de service cryptées ; et
l'envoi, par le dispositif d'encapsulation, du paquet de données au noeud de sensibilisation.

4. Procédé selon la revendication 2 ou 3, dans lequel le paquet de données est construit sur la base de l'un quelconque des protocoles suivants : le Protocole de Commande de Transmission, TCP, le Protocole de Sécurité de Couche de Transport, TLS, le Protocole Internet, IP, et le Protocole de Datagramme Utilisateur, UDP.

5. Procédé selon la revendication 1, dans lequel la fourniture, par le serveur, des informations d'application et des données de service cryptées au noeud de sensibilisation comprend :
l'envoi, par le serveur, des données de service cryptées au noeud de sensibilisation ; et
l'envoi, par le serveur, des informations d'application et des informations caractéristiques des données de service cryptées au noeud de sensibilisation, de sorte que le noeud de sensibilisation établisse une association entre les données de service cryptées et les informations d'application sur la base des informations caractéristiques.

6. Procédé selon la revendication 5, dans lequel l'envoi, par le serveur, des informations d'application et des informations caractéristiques des données de service cryptées au noeud de sensibilisation comprend :
la génération, par le serveur, d'un message de notification, dans lequel le message de notification comprend les informations d'application et les informations caractéristiques ; et
l'envoi, par le serveur, du message de notification au noeud de sensibilisation.

7. Procédé selon la revendication 5, dans lequel le système de communication Internet comprend un dispositif d'encapsulation configuré pour ré-encapsuler des données ; et
l'envoi, par le serveur, des informations d'application et des informations caractéristiques des données de service cryptées au noeud de sensibilisation comprend :
l'envoi, par le serveur, des informations d'application et des informations caractéristiques au dispositif d'encapsulation ; et
la génération, par le dispositif d'encapsulation, d'un message de notification, dans lequel le message de notification comprend les informations d'application et les informations caractéristiques ; et l'envoi du message de notification au noeud de sensibilisation.

8. Système de communication Internet comprenant un serveur, un dispositif terminal et un noeud de sensibilisation, le serveur comprenant un récepteur, un processeur et un émetteur, dans lequel
le récepteur est configuré pour recevoir une demande d'accès à l'application envoyée par le dispositif terminal ;
le processeur est configuré pour obtenir, en fonction de la demande d'accès à l'application, des données de service cryptées et des informations d'application correspondant aux données de service cryptées, dans lequel les données de service cryptées sont sous forme de texte chiffré, et dans lequel les informations d'application sont sous forme de texte brut et sont utilisées pour représenter des informations de service des données de service ; et
l'émetteur est configuré pour fournir les informations d'application et les données de service cryptées au noeud de sensibilisation, de sorte que le noeud de sensibilisation identifie les informations de service des données de service cryptées en utilisant les informations d'application.

9. Système de communication Internet selon la revendication 8, dans lequel
le processeur est en outre configuré pour générer un paquet de données, dans lequel le paquet de données comprend un en-tête de message et une charge utile, l'en-tête de message contient les informations d'application et la charge utile contient les données de service cryptées ; et
l'émetteur est configuré pour envoyer le paquet de données au noeud de sensibilisation.

10. Système de communication Internet selon la revendication 8, dans lequel le système de communication Internet comprend en outre un dispositif d'encapsulation configuré pour ré-encapsuler des données ; et
lors de la fourniture des informations d'application et des données de service cryptées au noeud de sensibilisation, l'émetteur est spécifiquement configuré pour :
envoyer, par l'émetteur, les informations d'application et les données de service cryptées au dispositif d'encapsulation, de sorte que le dispositif d'encapsulation génère un paquet de données et envoie le paquet de données au noeud de sensibilisation, dans lequel le paquet de données comprend un en-tête de message et une charge utile, l'en-tête de message contient les informations d'application et la charge utile contient les données de service cryptées.

11. Système de communication Internet selon la revendication 9 ou 10, dans lequel le paquet de données est construit sur la base de l'un quelconque des protocoles suivants : le Protocole de Commande de Transmission, TCP, le Protocole de Sécurité de Couche de Transport, TLS, le Protocole Internet, IP, et le Protocole de Datagramme Utilisateur, UDP.

12. Système de communication Internet selon la revendication 8, dans lequel lors de la fourniture des informations d'application et des données de service cryptées au noeud de sensibilisation, l'émetteur est spécifiquement configuré pour :
envoyer les données de service cryptées au noeud de sensibilisation ; et
envoyer les informations d'application et les informations caractéristiques des données de service cryptées au noeud de sensibilisation, de sorte que le noeud de sensibilisation établisse une association entre les données de service cryptées et les informations d'application sur la base des informations caractéristiques.

13. Système de communication Internet selon la revendication 12, dans lequel le fait que l'émetteur envoie les informations d'application et les informations caractéristiques des données de service cryptées au noeud de sensibilisation comprend spécifiquement :
le processeur est en outre configuré pour générer un message de notification, dans lequel le message de notification comprend les informations d'application et les informations caractéristiques ; et
l'émetteur est configuré pour envoyer le message de notification au noeud de sensibilisation.

14. Système de communication Internet selon la revendication 12, dans lequel le système de communication Internet comprend un dispositif d'encapsulation configuré pour ré-encapsuler des données ; et
lors de l'envoi des informations d'application et des informations caractéristiques des données de service cryptées au noeud de sensibilisation, l'émetteur est spécifiquement configuré pour :
l'émetteur est configuré pour envoyer les informations d'application et les informations caractéristiques au dispositif d'encapsulation, de sorte que le dispositif d'encapsulation génère un message de notification, dans lequel le message de notification comprend les informations d'application et les informations caractéristiques ; et le dispositif d'encapsulation envoie le message de notification au noeud de sensibilisation.
